# EUROPÄISCHE PATENTSCHRIFT

(11) **EP 0 847 374 B1**
(45) Veröffentlichungstag und Bekanntmachung des Hinweises auf die Patenterteilung: **28.05.2003**
(21) Anmeldenummer: 97930403.7
(22) Anmeldetag: 25.06.1997
(51) Int. Cl.: C02F 1/74, C02F 1/72, C02F 1/44, C02F 9/00

(54) **VERFAHREN ZUR WASSERAUFBEREITUNG IN EINEM GESCHLOSSENEN KREISLAUF MIT REAKTOR**
PROCESS FOR WATER TREATMENT IN A CLOSED CIRCUIT WITH A REACTOR
PROCEDE DE TRAITEMENT DES EAUX EN CIRCUIT FERME AVEC UTILISATION D'UN REACTEUR

(30) Priorität: 25.06.1996 DE 19625346
(43) Veröffentlichungstag der Anmeldung: 17.06.1998
(73) Patentinhaber: Maier, Joseph, 88212 Ravensburg (DE)
(72) Erfinder: Maier, Joseph, 88212 Ravensburg (DE)
(86) Internationale Anmeldenummer: EP9703337
(87) Internationale Veröffentlichungsnummer: WO97049639

(56) Entgegenhaltungen:
- EP-A- 0 634 364
- WO-A-96/09986
- DE-A- 4 116 557

## Beschreibung

Die Erfindung betrifft ein Verfahren zur Aufbereitung von belastetem Wasser, insbesondere Produktionswasser bzw. Abwasser, in einem zumindest teilweise geschlossenen Kreislauf mit Reaktor, vorzugsweise für die Papierproduktion gemäß dem Patentanspruch 1.

Gegenwärtig bereiten bei der Verarbeitung insbesondere von Altpapier, Zellstoffen und Holzstoffen die anfallenden Abwässer immer noch große Probleme. Die Abwässer, die unmittelbar in die Umwelt gelangen, belasten die Gewässer und das Grundwasser. Es ist deshalb im Interesse der Umwelt wünschenswert, die Abwässer von Prozessen, beispielsweise bei der Papierherstellung, derart aufzubereiten, daß eine Belastung der Umwelt durch Abwasser weitgehend oder vollkommen außer Acht gelassen werden kann.

Aus der DE 41 16 557 A1 ist ein Verfahren zur Behandlung von Abwasser bekannt, bei dem Abwässer wenigstens soweit aufbereitet werden sollen, daß sie als Papiermaschinen-Rückwasser zur Entfernung von Druckfarben und anderen unerwünschten Bestandteilen aus einem aufbereiteten Altpapier verwendbar sind. Bei den in dieser Druckschrift beschriebenen Verfahrensweisen aus dem Stand der Technik werden Verdampfungsverfahren zur Reinigung von Abwässern verwendet, die einen derartigen Energieverbrauch aufweisen, daß die Verfahren sowohl in Anbetracht des Energieverbrauchs als auch in Anbetracht der geringen Rückwasserausbeute in umwelttechnischem Sinne sehr nachteilig sind. Das Verfahren nach der DE 41 16 557 A1 selbst eignet sich nur für die Erzeugung von Wasser für die Abfuhr von Tintenbestandteilen aus Altpapierzellstoffen. Zwar wird hier der chemische Sauerstoffbedarf (CSB) zur Reinigung einer vorgegebenen Menge des Abwassers reduziert, jedoch ist die Anwendung des gereinigten Abwassers nach wie vor stark reduziert und der nach diesem Verfahren zu erzielende Kreislauf ist nach wie vor ein offener Kreislauf, dem große Mengen an Frischwasser zugeführt werden müssen, die weit über den Verdampfungsverlusten liegen. Die DE 44 13 304 A1 offenbart ein Verfahren, bei dem in sehr vorteilhafter Weise eine Umkehrosmose zur Reinigung von Abwässern eingesetzt wird. Dabei bereitet jedoch die Existenz von organischen Bestandteilen in der zu reinigenden Flüssigkeit in diesem wie auch in anderen Reinigungsverfahren große Probleme.

Zwar sind die Vorteile von im wesentlichen oder vollkommen geschlossenen Kreisläufen in jüngerer Zeit vielfach diskutiert worden, jedoch erfordern die bisher vorgeschlagenen Verfahren einen vollkommen unwirtschaftlichen Energieaufwand und die zu erzielenden Ergebnisse sind zweifelhaft, wobei hier auch insbesondere die Beseitigung von organischen Bestandteilen Probleme bereit.

Es ist die Aufgabe der vorliegenden Erfindung, ein Verfahren zur Aufbereitung von belastetem Wasser vorzuschlagen, das die Umwelt in entscheidender Weise entlastet; insbesondere soll ein Verfahren vorgeschlagen werden, das es ermöglicht, bei verschiedensten Produktionsprozessen, insbesondere bei der Herstellung von gefärbten Papieren, Tissue, sonstigen Papier- und auch Papprodukten, sowie beim Streichen von Papiersorten, einen weitgehendst oder sogar vollkommen geschlossenen Kreislauf zur Verfügung zu stellen, wobei die Reduktion von organischen Bestandteilen im Vordergrund steht.

Diese Aufgabe wird durch ein Verfahren gemäß dem Patentanspruch 1 gelöst.

Die in den Unteransprüchen aufgeführten Verfahrensschritte beziehen sich auf vorteilhafte Verfahrensvarianten des erfindungsgemäßen Verfahrens.

Die Vorteile gemäß der vorliegenden Erfindung beruhen darauf, daß belastetes Wasser bzw. Abwasser bis auf einen Gehalt von weniger als 200 mg/l, vorzugsweise 0 bis 150 mg/l Feststoffen grob gereinigt wird, um das grob gereinigte Wasser bzw. Abwasser in seinem pH-Wert auf einen Wert bis zu ca. 6,5, vorzugsweise 2 bis 3 einzustellen, und das grob gereinigte Wasser bzw. Abwasser wird auf eine Temperatur von 70 bis 160°C, vorzugsweise 100 bis 130°C aufgeheizt und einem Reaktionsraum zugeführt, wo das grob gereinigte Wasser bzw. Abwasser einer Oxidation unterzogen wird, um wenigstens biologische Rückstände zu oxidieren, um anschließend das vorgereinigte Abwasser mindestens einer Membranfiltereinrichtung bzw. Nanofiltereinrichtung zuzuleiten.

Die Oxidation des grob gereinigten Wassers wird in einer bevorzugten Ausführungsform mit einem Oxidationsmittel, vorrangig Luft-Sauerstoff, bei einer der voranstehend aufgezeigten Temperaturen vorgenommen.

Es kann darüber hinaus ein Katalysator eingesetzt werden, beispielsweise Peroxid bzw. Eisenoxid.

Ferner können organische Säuren zugesetzt werden, etwa Phosphorsäure oder Schwefelsäure um organische Rückstände im grob gereinigten Wasser bzw. Abwasser beikommen zu können.

In dem Reaktionsraum sollten bevorzugt Drucke von 1 bis 15 bar herrschen, wobei Drucke von 1 bis 5 bar bevorzugt verwendet werden.

Die Energie zum Erhitzen des Abwassers auf die voranstehend aufgeführten Temperaturen kann durch die Reaktionswärme, vorzugsweise über eine Wärmerückgewinnungsanlage, aufgebracht werden.

Falls die organischen Rückstände in dem zu oxidierenden Abwasser zu gering sind, kann vor der Anwendung des erfindungsgemäßen Verfahrens, eine Aufkonzentration vorgenommen werden, beispielsweise durch eine Umkehrosmose und/oder eine Nanofiltration, um beispielsweise einen Feststoffgehalt von 10 mg/l bzw. 50 mg/l oder dergleichen voreinzustellen. Bevorzugt wird ein Feststoffgehalt von ca. 100 mg/l eingestellt, da bei einem derartigen Feststoffgehalt, der die organischen Bestandteile umfaßt, die Oxidationsreaktion besonders vorteilhaft beherrscht wird.

Ferner ist es bevorzugt bei Beginn des erfindungsgemäßen Verfahrens zunächst beispielsweise über eine elektrische Heizung, Mikrowellenheizung oder dergleichen die erforderliche Abwassertemperatur voreinzustellen, um dann, sobald die Oxidationsreaktion bei der Vorreinigung mit der gewünschten Temperatur arbeitet, die Reaktionswärme für die Erhitzung des Abwassers über eine Wärmerückgewinnungsanlage zur Verfügung zu stellen.

Bei der nachfolgenden Erörterung weiterer vorteilhafter Verfahrensvarianten wird auf die erfindungsgemäße Vorreinigung zusammenfassend als Vorreinigung bezug genommen.

Nach der Vorreinigung gemäß der vorliegenden Erfindung ist das Abwasser faserfrei und weist einen Feststoffgehalt von vorzugsweise weniger als 20 mg/l auf. Das sich daraus ergebende vorgereinigte Abwasser wird bezüglich seines pH-Wertes auf 2 bis 11 eingestellt, um anschließend das mit einem pH-Wert in diesem Bereich vorliegende Abwasser auf einen Konzentrationsbereich von vorteilhafterweise ≤9,5 bis 1 x 10⁻¹⁶ g/l an Ionen einzustellen, wobei die Ionen überwiegend Schwermetallionen oder Sulfationen sind. Erfindungsgemäß sollten jedoch Bariumsulfationen auf einen maximalen Gehalt von 10⁻⁹ bis 10⁻¹⁰ g/l oder weniger und Kalziumsulfationen maximal auf einen Gehalt von 5 x 10⁻⁴ bis 10⁻⁵ g/l oder weniger eingestellt werden, da sich überraschend gezeigt hat, daß gerade diese häufig sehr konzentriert vorhandenen Verbindungen eine Behinderung der Umkehrosmose verursachen können, weshalb sie von den Membran- bzw. Nanofiltereinrichtungen in dem angegebenen Maße fernzuhalten sind. Als Schwermetalle kommen beispielsweise Barium, Strontium auch in Verbindung mit Sulfat in Betracht. Ferner kommen Kalzium und Natriumsulfat, Eisensulfate und eine Vielzahl anderer Schwermetallsulfate oder reine Schwermetalle in Betracht, wobei deren Konzentration gemäß der Erfindung zu kontrollieren ist. Dabei kommen Fällungsmittel in Betracht, um das Abwasser auf einen tolerierbaren Gehalt an entsprechenden Ionen einzustellen. Auch eine Verdünnung mit gereinigtem Wasser oder mit Frischwasser kann hier in Betracht gezogen werden. Das so behandelte Wasser wird über mindestens eine Umkehrosmose- oder Nanofiltereinrichtung gefiltert, wobei hier die Trennung eines Abwassers in ein Permeat von einem sich aufkonzentrierenden Abwasser (Konzentrat) vorgenommen wird. Das Permeat kann als Rückwasser in den Herstellungsprozeß zurückgeleitet werden und ohne weiteres auch für die Herstellung von hochwertigsten Papierprodukten eingesetzt werden, da die Reinheit dieses Rückwasser, das gemäß der Erfindung zu erzielen ist, überragend ist. Das Konzentrat kann weiteren Filtereinrichtungen zugeleitet werden, wobei Einrichtungen mit Membranfiltern zu bevorzugen sind, oder kann einem Verdampfungsschritt oder einem Eindickungsschritt zugeführt werden, um das Konzentrat beispielsweise in einen endlagerungsfähigen Reststoffblock oder aber in ein für die thermische Verwertung geeignetes Material umzuwandeln.

Das den Filtereinrichtungen zugeführte Abwasser weist eine Wassertemperatur von vorzugsweise kleiner als 70°C auf.

Vorteilhafterweise werden für die Membraneinrichtungen Flachmembranen verwendet, die bevorzugt als Membrankissen mit innenliegendem Gewebeflies hergestellt sind. Das Gewebeflies wird verwendet, um die Ableitung des Permeats bzw. des Filtrats zu ermöglichen. Vorzugsweise werden diese Membrankissen ohne Klebetechnik zusammengefügt, sondern mittels eines Schmelzverfahrens oder beispielsweise einer Ultraschalltechnik, über die die beiden das Gewebeflies einschließenden Flachmembranen zusammengefügt werden. Die Flachmembranen bzw. Membrankissen werden von außen mit Abwasser unter einem höheren bzw. relativ hohen Druck angeströmt und durch die Flachmembranen hindurch tritt gefiltertes Wasser, das Permeat bzw. Filtrat, hindurch und fließt durch das zwischen den Flachmembranen liegende Gewebeflies. Das Membrankissen ist mittig mit einem Loch versehen. Das Membrankissen liegt zwischen zwei Scheiben, beispielsweise aus Kunststoff oder dergleichen, die jeweils ebenfalls mittig mit einem Loch versehen sind, das mit einer Dichtung umgeben ist, wobei die Dichtung auf die angrenzende Bereiche des Membrankissens drückt. Durch die Dichtung hindurch schaut das Gewebeflies, so daß das Konzentrat von dem Loch im Membrankissen und in der Scheibe ferngehalten wird, jedoch das Permeat bzw. Filtrat über das Gewebeflies einen Zugang zu dem Loch findet.

In einer Membranfiltereinrichtung können eine Vielzahl von aufeinanderliegenden Schichten von Membrankissen und daran anschließenden Dichtscheiben angeordnet sein, die dann von dem Abwasser der Reihe nach angeströmt werden. Entlang einer derartigen Anordnung wird das Abwasser immer mehr konzentriert, da sauberes Wasser, das Permeat, über die aneinander angrenzenden mittigen Löcher der aufeinanderliegenden Membrankissen bzw. Dichtscheiben abgeführt wird.

Wichtig ist hier, daß die Mmebranen bzw. Membrankissen eine möglichst glatte Außenfläche haben, damit sich Schad- bzw. Schmutzstoffe, die im Abwasser sind, nicht innerhalb kurzer Zeit an der Membran abscheiden und diese damit verstopfen können.

Vorzugsweise liegt der Druck des in die Membran- bzw. Flachmembranfiltereinrichtungen eingeleiteten Abwassers zwischen ca. 10 und 180 bar, vorzugsweise zwischen 30 und 60 bar, bis zu 120 bar.

Insofern Nanofilter verwendet werden, um die Filtereinrichtungen für das Wasser zusammenzustellen, sollte ein Druck in dem Bereich von ca. 20 bis 50 bar eingestellt werden. Zwar dürften Membran- und insbesondere Flachmembranfilter zu bevorzugen sein, jedoch kann auch eine Anordnung von Nanofiltereinrichtungen zu einem durchaus vergleichbaren Ergebnis führen. Für die Nanofiltration wird im Grunde die gleiche Anlagentechnik eingesetzt. Unterschiede sind in der Membranbeschaffenheit und somit in der Durchsatzleistung zu finden, die je nach Abwasser bis zum Zweifachen betragen kann.

Zusätzlich zu einer oder mehreren hintereinander geschalteten Filtrationsstufen mit Membran- bzw. Flachmembranfiltern können im Zulauf zu den Flachmembranfiltern oder auch zwischen den aufeinanderfolgenden Membranfiltereinrichtungen weitere Filtereinrichtungen vorgesehen sein, um zwischenzeitlich durch die fortschreitende Konzentrierung des Abwassers ausgeflockte Stoffe von den nachfolgenden Membran- bzw. Flachmembranfiltereinrichtungen zurückzuhalten.

Werden mehrere Membranfiltereinrichtungen bzw. Umkehrosmoseeinrichtungen und/oder Nanofiltereinrichtungen nacheinander angeströmt, so sollten die jeweils nachfolgenden Stufen mit einem erhöhten Druck angeströmt werden. Dabei können zwar beispielsweise die ersten beiden Stufen mit Membran- bzw. Flachmembranfiltern mit Drücken zwischen 15 und 65 bzw. 25 und 65 bar angeströmt werden, jedoch liegen die Drücke bzw. Betriebsdrücke der nachfolgenden Filtereinrichtungen höher, unter Umständen weitaus höher, etwa bei 35 bis 65 bar für die dritte und 80 bis 120 bar für die vierte bzw. letzte Filtrationsstufe.

Vorteilhafterweise wird insbesondere der Eisensulfatgehalt im Abwasser bis zur Flockungsgrenze reduziert, bevor die Filtereinrichtungen angeströmt werden. Auch zwischen einzelnen, aufeinanderfolgenden Filtereinrichtungen kann der Eisensulfatgehalt jeweils bis zur Flockungsgrenze verringert werden.

Das aus den hintereinander geschalteten Stufen aus Umkehrosmoseeinrichtungen bzw. Nanofiltereinrichtungen ableitbare Permeat bzw. Filtrat kann später in den Kreislauf zurückgeführt werden, wobei in der Regel noch Frischwasser zuzuführen sein wird, weil nämlich während des vorgeschalteten Herstellungsprozesses Wasser aus dem vorhandenen Kreislauf verdampft wird. Aber auch wenn Wasser aus dem Kreislauf verdampft wird, ist ein derartiger Kreislauf immer noch als geschlossen anzusehen, da über Verdampfung aus dem Kreislauf abgeführtes Wasser im wesentlichen oder gar vollkommen schadstofffrei ist und nicht in der gegenwärtig noch praktizierten Weise mit einem hohen Anteil an Schadstoffen in meist unzureichend arbeitende biologische Abwasserreinigungsanlagen abgeleitet werden muß, die ein sehr schlechtes CSB-Verhältnis und keine Entsalzung aufweist.

Zwar tritt freies Chlor in üblichen Abwässern nur noch selten auf, jedoch ist es unbedingt erforderlich, das Chlor vor der Filtration in der Umkehrosmose- bzw. Nanofiltereinrichtungen zu entfernen oder zu binden bzw. auszufällen. Freies Chlor könnte das Material der Filtereinrichtungen beschädigen.

Das konzentrierte Abwasser bzw. Konzentrat wird vorteilhafterweise nach der Filterung in den Membran- bzw. Nanofiltereinrichtungen unter Zufuhr von Energie, vorzugsweise Wärmeenergie, etwa über einen Verdampfungsschritt weiter eingedickt. Der Wasserdampf kann ebenfalls rückgeführt, kondensiert und dem Permeat bzw. Filtrat zugeleitet werden, um nachfolgend wieder dem Herstellungsprozeß zugeführt zu werden.

Experimente haben gezeigt, daß bei einem Kreislauf, wie er einer Größenordnung entspricht, die in der Industrie häufig auftritt, Membranfiltereinrichtungen in bestimmten Zeitintervallen mit einer Reinigungsflüssigkeit, beispielsweise sauberem Wasser oder anderen Flüssigkeiten, durchspült werden müssen. Dabei ist zu beachten, daß aufgrund der Bakterienbelastung des Abwassers auch antibakterielle bzw. antivirale Mittel in der Spülflüssigkeit enthalten sein können. Wird dieses nicht gemacht, können die Filtermaterialien von Organismen befallen und sogar durchwachsen werden, die dann ein Filtermaterial mit einer Standzeit von bis zu drei Jahren in kürzester Zeit unbrauchbar machen können. Bevorzugte Zeitintervalle für einen Reinigungszyklus liegen zwischen 30 und 140 Stunden, wobei sich Reinigungszyklen in Abständen von 60 bis 120 Stunden besonders bewährt haben. Die Reinigungsflüssigkeit hat hierbei einen Druck von ca. 2 bis 15 bar und kann gegebenenfalls auch mit einem Druck durch die Filtereinrichtungen hindurchgeleitet werden, der dem des Abwassers während des Reinigungs- bzw. Aufbereitungsverfahrens entspricht.

Das Konzentrat kann nicht nur mit großen Vorteilen über einen Verdampfungsschritt weiterbehandelt werden, sondern kann alternativ oder partiell ebenfalls über andere physikalische und/oder chemische Entsorgungsschritte behandelt werden. Zum Beispiel kann ein Adsorptionsschritt, eine Fällung, bzw. eine Eindickung des Konzentrats vorgenommen werden, um die hochkonzentrierten Abwasserbestandteile soweit von dem wiederverwendbaren Wasser zu trennen, daß letztlich nur noch zähe oder sogar feste Bestandteile zurückbleiben, die beispielsweise thermisch, etwa in einem Kraftwerk oder dergleichen, verwertet werden können.

Wie der vorstehenden Beschreibung zu entnehmen ist, setzt die vorliegende Erfindung an einer Stelle ein, an der bereits physikalisch bzw. mechanisch entfernbare Stoffe durch Flotation bzw. Mikroflotation aus dem Abwasser entfernt worden sind. Die Erfindung schafft eine Möglichkeit, um eine praktikable interne Kreislaufentsalzung zur Verfügung zu stellen. Hierdurch ist es möglich, bei Herstellungsprozessen in Papierfabriken, Zellstoffabriken, Holzstoffabriken, Textilfabriken oder artverwandten Produktionsstätten Wasserkreisläufe soweit zu schließen, daß für die Umwelt kaum noch eine Belastung zu befürchten ist. Durch die Erfindung läßt sich das Abwasser von Schadstoffen, wie etwa Kalzium-Karbonat, Kolloiden, Farben, Keimen, Salzen, Sulfaten, etc., soweit reinigen, daß das zurückgeleitete Wasser, das Permeat bzw. Filtrat, eine Qualität aufweist, die mit herkömmlichen Anlagen mit Frischwasserzufuhr und Abwasserbetrieb auch bei wesentlich höheren Volumenströmen gerade noch erreichbar ist.

Während bei gegenwärtigen bekannten Systemen je nach der Qualität des Papier-Endproduktes eine bestimmte Frischwassermenge pro kg erzeugtes Papier zugeführt werden muß, die etwa zwischen 4 und 30 l liegt, braucht bei dem Verfahren gemäß der Erfindung lediglich Frischwasser in einem Bereich von 1,5 bis 2 l pro kg Papier zugeführt zu werden, was im wesentlichen gerade der Menge des in einem Prozeß pro kg hergestellten Papiers verdampften Wassers entspricht. Das heißt, wenn für Papier guter Qualität bei bekannten Verfahren beispielsweise 15 bis 20 l Frischwasser pro kg Papier erforderlich sind, liegt der Frischwasserverbrauch bei dem Verfahren gemäß der Erfindung nach wie vor lediglich bei 1,5 bis 2 l pro kg Papier. Damit ist es überraschenderweise möglich, mit der vorliegenden Erfindung pro kg Papier bis zu zwanzigmal weniger Frischwasser zu verbrauchen.

Da ein Permeat bzw. ein Filtrat mit einer derartig geringen Leitfähigkeit und mit einem durch die Entsalzung sehr geringen pH-Wert leicht aufgrund von chemischen oder thermischen Wechselwirkungen zu Agglomerationen und somit Störungen führen kann, ist es wichtig, an welcher Stelle das Permeat bzw. der Frischwasserersatz in den Herstellungsprozeß zurückgeführt wird.

Da durch Entnahme der Salze die pH-Pufferwirkung entfällt, sinkt dieser sehr stark ab. Wird das Permeat unkontrolliert in den Prozeß zurückgeführt entsteht eine Schockwirkung und somit Agglomerationen, was das Endprodukt erheblich beeinträchtigt. Aus diesem Grunde muß das Permeat mit dem zugeführten Frischwasser gemischt und als Dichtwasser, HD-Spritzwasser etc. eingesetzt werden.

Die anfallenden Reststoffe können einer Deponie, einem Verbrennungsofen oder einer anderweitigen Verwertung unterworfen werden. Eine Eindampfung von Reststoff kann gemäß der Erfindung häufig erübrigt werden. Allerdings ist es zur weiteren Aufkonzentrierung der Reststoffe durchaus von Vorteil, die hochkonzentrierten Abwässer auch durch übliche Eindampfung weiter aufzukonzentrieren.

Das erfindungsgemäße Verfahren, das bei der zellstoffverarbeitenden Industrie, der holzverarbeitenden Industrie, der Textilindustrie sowie der Papierindustrie und nicht zuletzt auch bei der Streichmassenaufbereitung (grafisches Papier, Durchschreibepapier, Thermopapier, etc.) zur Anwendung kommen kann, ermöglicht es, die Umwelt in einem herausragenden Maße zu entlasten, wobei der elementare Rohstoff "Trinkwasser" als auch in Zukunft unersetzbare Resource geschützt wird. Darüber hinaus wird der Verbrauch an Frischwasser stark reduziert. Die mit dem rückgeführten, gereinigten Abwasser hergestellten Erzeugnisse weisen die Qualität auf, die auch durch die gegenwärtig verwendeten Verfahren erzielt wird. Der Energieverbrauch wird entscheidend gesenkt.

Nachfolgend wird die vorliegende Erfindung anhand von bevorzugten Ausführungsbeispielen unter Bezugnahme auf die anliegenden Figuren näher erläutert. Dabei werden weitere Merkmale und Vorteile gemäß der vorliegenden Erfindung offenbart. Es zeigen:
Fig. 1 einen in einem Wasser- bzw. Abwasserkreislauf eingesetzen Verfahrensablauf, der die erfindungsgemäßen Schritte umfaßt.
Fig. 2 einen in einem Wasser- bzw. Abwasserkreislauf einer Fabrik eingesetzten Verfahrensablauf, der die erfindunsgemäßen Schritte enthalten kann.
Fig. 3 einen Verfahrensablauf, der eine bevorzugte Ausführungsform gemäß dem erfindungsgemäßen Verfahren verwirklicht;
Fig. 4 einen erfindungsgemäßen Verfahrensablauf, wie er in diesem Ausführungsbeispiel beim Streichen von Papieren verwendbar ist; und
Fig. 5 einen alternativen erfindungsgemäßen Verfahrensablauf in einem schematischen Ablaufdiagramm.

In den nachfolgenden Figuren sind gleiche Einrichtungen bzw. Verfahrensstufen mit gleichen bzw. um 100 heraufgesetzten Bezugszeichen gekennzeichnet. Die im Folgenden aufgeführten bevorzugten Verfahrensvarianten können miteinander frei kombiniert werden, wobei jedoch die Oxidationsreaktion wesentlicher Bestandteil der Erfindung ist und jeweils gemäß der vorliegenden Erfindung in ihren Variationen beizubehalten ist.

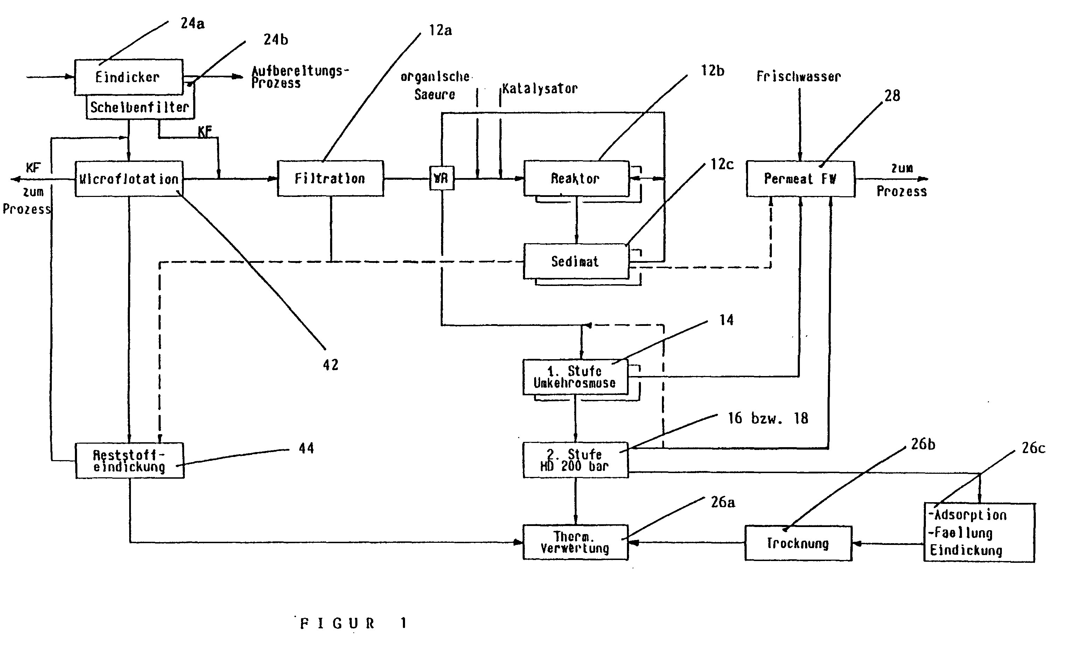

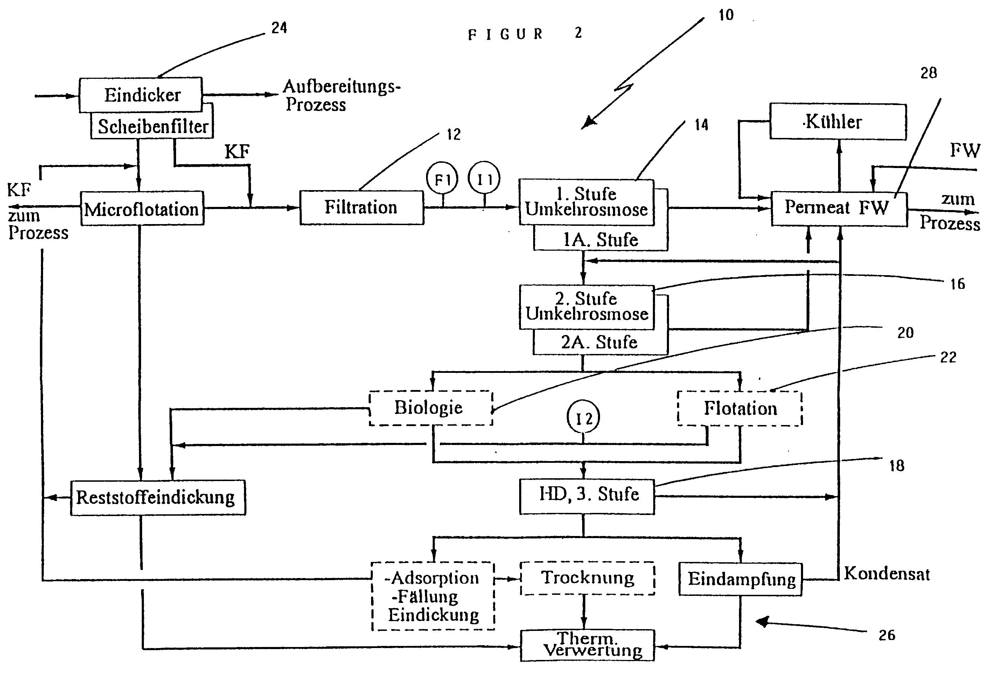

Gemäß Figur 1 ist in einem Verfahrensablauf einer bekannten Art eine Vorfiltration 12a, 12b, 12c vorgesehen, die in den nachfolgenden Ausführungsbeispielen nach den Figuren 2 bis 4 zusammenfassend als Filtration 12 aufgeführt wird.

Gemäß der in Figur 1 dargestellten Verfahrensweise wird ein Abwasser zunächst in einem Eindicker 24a sowie einem Scheibenfilter 24b grob gereinigt. Das derart grob gereinigte Abwasser kann in einer herkömmlichen Weise in einer Mikroflotationseinheit 42 weiter prozessiert werden, was hier jedoch nicht näher erläutert zu werden braucht, da derartige Verfahrensweisen zum Stand der Technik gehören. Dies gilt auch für die Reststoffeindickung 44, sowie die thermische Verwertung 26a, die Trockung 26b sowie die Absorption, Fällung bzw. Eindickung 26c. Im übrigen darf auch auf die Erläuterungen zu den nachfolgenden Ausführungsbeispielen gemäß den Figuren 2 bis 4 verwiesen werden, wo beispielsweise die Einrichtungen gemäß den Bezugszeichen 26a bis c gemeinschaftlich unter Bezug auf die Bezugsziffer 26 erläutert werden.

Bei dem erfindungsgemäßen Verfahren, das in der Papier-, der Zellstoff-, der Holzstoff-, der Textil-, der Leder-, der chemischen, der Automobil-, der Lebensmittel- und der der Getränkeindustrie zum Einsatz kommen kann, verwendet man einen Reaktionsraum bzw. Reaktor 12b, dem grob gereinigtes Abwasser zugeführt werden kann, das vor der Einleitung in den Reaktor 12b, selbstverständlich aber auch im Reaktor 12b, mit einer organischen Säure, beispielsweise Phosporsäure oder Schwefelsäure und mit einem Katalysator, beispielsweise Peroxid, Eisenoxid oder dergleichen, versetzt werden kann. Im Reaktor wird das Abwasser vorrangig mit Luft-Sauerstoff bzw. mit dem Katalysator und/oder der organischen Säure zur Reaktion bzw. Oxidation gebracht, wobei organische Substanzen in dem Abwasser aufoxidiert werden.

Die Grobreinigung erfolgt in einem Eindicker 24a sowie in dem Scheibenfilter 24b und/oder bei einer Mikroflotation zur Feststoffreduzierung auf ca. 100 mg/l. Die Filtration 12a kann durch einen Wand-, einen Fließ-, einen Tuch-, oder einen Sandfilter vorgenommen werden, um eine Feststoffreduktion auf ca. 50 mg/l, bevorzugt maximal 80 mg/l vorgenommen werden. Derartige Filter werden auch als Polizeifilter bezeichnet. In dem Reaktor 12b wird zum Aufoxidieren der in dem grob gereinigten Abwasser enthaltenen organischen Substanzen bevorzugt in erster Linie Luft-Sauerstoff verwendet, wobei die organischen Abwasserinhaltsstoffe zu Kohlendioxid und Wasser oxidiert werden können. Um eine hinreichend schnelle Oxidationsreaktion und damit ein nicht übermäßig großes Reaktorvolumen des Reaktors 12b gewährleisten zu können, kann eine von der Menge der organischen Abfallstoffe in dem Abwasser abhängige Menge an Katalysator bzw. Säure zugeführt werden, wobei als Katalysator Peroxid, Eisenoxid oder dergleichen H verwendet werden kann, wobei Peroxid bevorzugt wird. Die organische Säure kann in Form von Phosphorsäure oder Schwefelsäure bzw. vergleichbaren Säuren zugeführt werden.

Die in dem Reaktor 12b verwendeten Verfahrensparameter liegen bzgl. des pH-Wertes bei 2 bis 3 und vorzugsweise maximal 5. Das Abwasser wird bei einer Temperatur von 100 bis 130°C hinsichtlich der darin enthaltenen organischen Substanzen prozessiert. Die vorzugsweise verwandten Oxidationsdrucke liegen zwischen 1 und 5 bar, können jedoch aber auch darüber oder darunter liegen.

Während der Anlaufzeit, d.h. so lange der Reaktor nicht auf seiner Reaktionstemperatur ist, kann zur Erwärmung des Abwassers Dampf oder Strom herangezogen werden, bzw. können größere Mengen an Reaktionshilfsstoffen beigegeben werden, wie etwa größere Mengen an Katalysator, Luft-Sauerstoff oder dergleichen.

Sobald die Oxidationsreaktion im Reaktor 12b in einem optimierten Bereich liegt, kann die chemische Reaktion innerhalb des Reaktors über einen Wärmetauscher dazu verwendet werden, um das dem Reaktor 12b zuzuführende Abwasser zu heizen, um das Abwasser auf die erforderliche Reaktionstemperatur zu bringen. Hierdurch kann das zugeführte Abwasser ohne Fremdenergie nur durch die Energie des Oxidationsprozesses durch Wärmeentzug des Klarwassers aufgeheizt werden.

Sich durch die Reaktion im Reaktor 12b absetzende Stoffe können in dem Sedimat 12c aus dem vorgereinigten Abwasser entfernt werden, wobei übliche Technologien herangezogen werden, die dem Fachmann bekannt sind und folglich hier nicht weiter erörtert werden.

Durch die Verwendung des Reaktors 12b wird der ansonsten anfallende Bioschlamm aufoxidiert und es bleiben lediglich Wasser, CO₂ sowie anorganische Stoffe zurück, die dem Abwasser auf vereinfachte Weise zu entnehmen sind.

Das ansonsten nachteiligerweise auftretende Fouling auf den Membranen nachfolgender Reinigungsstufen tritt nicht mehr auf, weil das vorgereinigte Wasser keimfrei ist. Es entsteht folglich keine Belastung nachfolgender Filtrations- bzw Membranfiltrationsstufen mit biologischen Rückständen, die durch Bakterienwachstum aktiv sind, so daß längere Spülzyklen möglich sind.

Später dann kann eine im Hinblick auf die Figuren 2 bis 4 näher erläuterten Umkehrosmose bzw. Nanofiltration vorgenommen werden, wobei gelöste Substanzen wie CSB, BSB5, Farben, Salze, etc. in den einzelnen Stufen der Feinfiltration entfernt werden können. Dabei kann in der ersten Stufe ein Betriebsdruck zwischen 20 bis 60 bar, in der zweiten Stufe von 40 bis 120 bar und in der Endstufe von 80 bis 200 bar für die Membranfiltration bei der Umkehrosmose bzw. Nanofiltration herangezogen werden. Die Reststoffe sollten nach Beendigung des Verfahrens auf ein Minimum von weniger als 1% reduziert sein. Die CSB- und BSB5-Verunreinigungen werden durch das obige Verfahren bei geringstem Energieaufwand um 99% reduziert, was einen geschlossenen bzw. quasi-geschlossenen Kreislauf ermöglicht.

Die in der folgenden Tabelle aufgeführten Wirkungsgrade ergaben sich bei Reihenuntersuchungen, die unter Verwendung des erfindungsgemäßen Verfahrens erzielt werden konnten.

**Tabelle**

| | |
|---|---|
| Sulfat | 99 - 99,9% |
| Chlorid | 99 - 99,8% |
| Ammonium | 97 - 98% |
| Nitrat | > 96% |
| CSB | > 98% |
| TOC | 98 - 99% |
| KW | 97 - 98% |
| Nickel | > 96% |
| Chrom | > 95% |
| Kupfer | > 89% |
| Vanadium | > 99% |

Es ist auch möglich, die erfindungsgemäße Verfahrensweise, die jedenfalls die Oxidationsreaktion mit dem Reaktor 12b umfaßt, vorzunehmen, nachdem eine Grobreinigung des Abwassers mit den Einrichtungen 24a, 24b bzw. 42 vorgenommen worden ist, und eine Filtration mittels der Einrichtung 12a, etwa einem Polizeifilter, durchgeführt wurde, um dann zunächst eine Umkehrosmose mittels einer oder zwei Stufen vorzunehmen, um anschließend eine Fällungsstufe vorzusehen, wie sie beispielsweise in Figur 2 in Form des Biologie- und/oder Flotationsabschnitts 20, 22 angedeutet ist. Anschließend kann eine weitere Umkehrosmose in Form einer Endstufe 18 (Figur 2) vorgesehen sein, die zur Aufkonzentration der Reststoffe bei gering belasteten Abwässern bei einem Betriebsdruck von 80 bis 200 bar arbeitet.

Auch die hier zu erzielenden Wirkungsgrade entsprechen den in der voranstehenden Tabelle aufgeführten Werten.

In Fig. 2 ist der dargestellte Teil eines Wasserkreislaufs einer Fabrik allgemein und durch das Bezugszeichen 10 gekennzeichnet worden, wobei der erfindungsgemäße Bereich 12b funktionell in die Filtrationsstufe 12 aufgenommen ist, wo auch die Sedimentierung 12c vorgenommen werden kann.

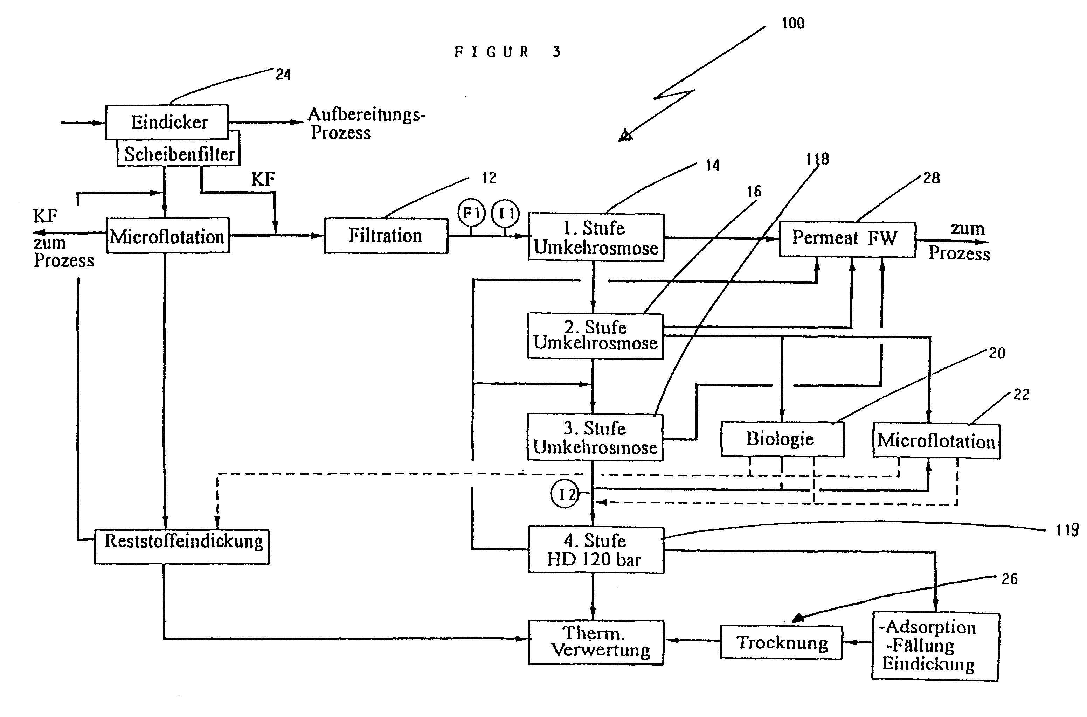

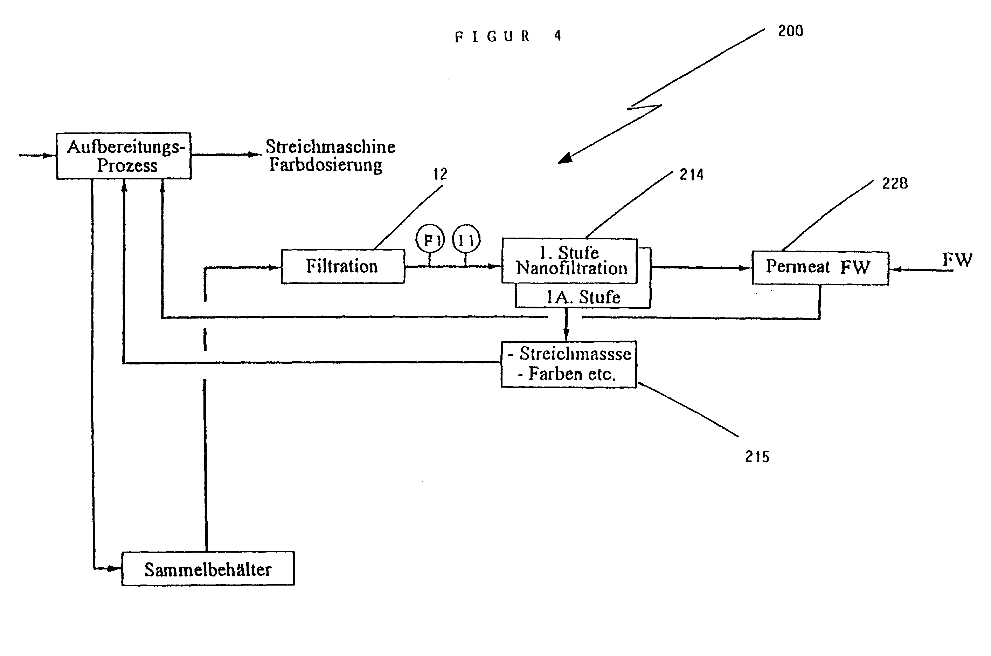

Dies gilt auch für die Ausrührungsformen gemäß der Figuren 3 und 4.

Der Erfindung entsprechend wird das Abwasser nach einer Vorbehandlung in einer Filtrationsstufe 12 und gegebenenfalls in den davor befindlichen Verfahrensstufen derart vorbehandelt, daß der Feststoffgehalt des Abwassers kleiner als 20 mg/l wird. Bereits vor der Filtrationsstufe 12 oder danach, bevor das Abwasser in eine darauffolgende Filtrationseinrichtung 14, im vorliegenden Fall eine Membranfiltrationseinrichtung 14, eingeleitet wird, wird der pH-Wert des Abwassers auf einen Wert zwischen 2 und 11 eingestellt. Ebenfalls in dem Bereich vor der ersten der weiteren Membranfiltereinrichtungen 14 wird die Konzentration an schädlichen Ionen in dem Abwasser auf weniger als 10⁻¹⁶ g/l begrenzt, wobei Bariumsulfat-Ionen jedenfalls auf ≤ 10⁻¹⁰ g/l und Kalziumsulfat-Ionen auf ≤ 10⁻⁵ g/l Abwasser eingestellt werden sollten. Dieses geschieht beispielsweise durch Oxidation über Belüftung, Sauerstoff; Fällungsmittel, Aluminiumsulfat, Polyaluminiumchlorid, Kalkmilch, kathodische Abscheidung von Edelmetall und Metallionen. Die anodische Oxidation dient zum Abscheiden von Cyanid, Nitrat, Chlorid ect.. Auf diese Weise können Metallionen durch Reduktion zum entsprechenden Metalll abgeschieden werden.

Fig. 2 ist zu entnehmen, daß vor der ersten Filtrationsstufe 14 beispielsweise mittels Umkehrosmose, Meßeinrichtung (F1, I1) vorgesehen sind, wobei diese Bezugszeichen, wie auch das Bezugszeichen I2, die Möglichkeit einbeziehen, mit den obigen Fällungsmitteln den Feststoffgehalt (F1) und/oder die Konzentration an Ionen zu beeinflussen bzw. einzustellen. Die Konzentration an Ionen kann auch noch vor der Hochdruckstufe bei I2 eingestellt werden, da die Bestandteile des auf konzentrierten Abwassers die Filterstruktur zusetzen könnten.

Entsprechende Einrichtungen sind auch bei den Ausführungsformen gemäß Fig. 3 und 4 vorgesehen.

Der Feststoffgehalt wird wenigstens vor der ersten Stufe 14 so eingestellt, daß die nachfolgenden Stufen ohne weitere Messung betrieben werden können.

Die Ionenkonzentration ist für die nachfolgenden Stufen auf Grund der Ausbeute ebenfalls berechenbar. Nach einer möglichen Fällung, die vor jeder Stufe durchgeführt werden kann, sollte eine Ionenmessung durchgeführt werden.

Auch ist es möglich, den Ionengehalt des Abwassers dadurch zu reduzieren, daß Wasser zugesetzt wird, das einen geringen Ionengehalt aufweist.

Das derart vorbereitete Abwasser bzw. ein Abwasser mit diesen Werten, wird der ersten Membranstufe 14 zugeführt.

In der ersten Membranfilterstufe 14 wird das Abwasser unter Druck durch Flachmembranen hindurchgepreßt. Versuche haben ergeben, daß sich Flachmembranen äußerst vorteilhaft für diese Art von Filtration einsetzen lassen. Die ebenfalls verfügbaren Spiral- bzw. Rohrmembranen eignen sich weit weniger für das erfindungsgemäße Verfahren, da sich für die gewünschten Reinigungszwecke in der Praxis kaum oder gar nicht umsetzbare Filteranordnungen ergeben würden. Darüber hinaus benötigen diese wenig geeigneten Membranfilter aufgrund der großen Querschnitte sehr kurze Spülzyklen. Die Filtration im Abasserkreislauf muß sehr häufig unterbrochen werden, um mittels großer Mengen an Spülflüssigkeit die Membranwände freizuspülen.

Zu der ersten Filtrationsstufe, die bevorzugt aus Flachmembranen aufgebaut ist, gehört auch eine 1.A-Stufe. Bei dieser Lösung wird die 1. Stufe mit der 3-fachen Permeatmenge, die 1.A-Stufe mit der 2-fachen Permeatmenge angeströmt somit wird ein hoher Spüleffert und damit verbunden eine hohe Membranstandzeit bei geringem Energiebedarf und Anlagenkosten erzielt.

Das aus der ersten Filtrationsstufe 14 abgeführte Permeat bzw. Filtrat kann zu einer Sammelstufe 28 geführt werden, wo das Permeat aus einer bzw. mehreren Filtrationsstufen 14, 16, 18 gesammelt werden kann, um mit geringen Mengen Frischwasser versetzt zu werden. Die Flüssigkeit, die das Permeat und das Frischwasser enthält, wird anschließend wieder dem Produktionsprozeß, etwa in der Papierindustrie, zugeführt.

Das in der ersten Membranfiltereinrichtung 14 aufkonzentrierte Abwasser wird einer nachfolgenden Membranfiltrationsstufe 16 zugeführt, wo im Prinzip gegebenenfalls unter einem etwa höheren Druck das Abwasser in gleicher Weise durch Flachmembranfilter aufkonzentriert wird, wobei gleichzeitig wieder ein Permeat abgeführt wird, das der Sammeleinrichtung 28 zugeführt wird. In der zu der Membranfiltrationsstufe 16 gehörigen 2A.-Stufe laufen prinzipiell die gleichen verfahrenstechnischen Schritte ab, wie in der zu dem Membranfilter 14 gehörigen Stufe. Lediglich der Rohwasserdruck ist aufgrund der höheren Konzentration gegenüber der 1. Stufe höher.

Das nach der Membranfiltrationseinrichtung 16 anfallende Konzentrat ist bereits relativ stark aufkonzentriert und kann deshalb einer Zwischenbehandlung unterzogen werden. Hier kommen beispielsweise entweder ein Flotationsvorgang möglicherweise mit Fällung, Absorbtion etc. in einer entsprechenden Einrichtung 22 oder eine biologische Behandlung in einer entsprechenden Einrichtung 20 infrage. Beide Vorgänge können auch in Kombination durchgeführt werden. In diesen beiden Einrichtungen 20, 22 können durch die hohe Konzentration gelöste Feststoffe dazu neigen, auszufällen und können auf diese Weise beispielsweise in der Einrichtung 22 aus dem aufkonzentrierten Abwasser entfernt werden. In der Biologieeinrichtung 20 können beispielsweise mittels Sauerstoffzufuhr oder vergleichbaren Maßnahmen weitere Reinigungsprozesse vorgenommen werden.

Die Reinigungsstufen 20 und 22 sind je nach Rohwasserbeschaffenheit auch nach der 1. oder 3. Filtrationsstufe einsetzbar. Durch die Reinigungsstufen 20 und 22 werden die nachgeschalteten Filtrationsstufen erheblich entlastet und dadurch die Membranstandzeit beträchtlich erhöht. Des weiteren wird je nach Rohwasserbeschaffenheit der Betrieb weiterer Filtrationsstufen erst ermöglicht.

Die aus den Einrichtungen 20, 22 abgeführten Abfallstoffe können beispielsweise in einer nachfolgenden Anlage zur Reststoffeindickung weiterbehandelt werden.

Das durch die Einrichtungen 20, 22 behandelte Abwasser kann einer weiteren Membranfiltereinrichtung 18 zugeführt werden, die aufgrund der hohen Konzentration von Schadstoffen als Hochdruckstufe ausgeführt sein kann. Hier werden Drücke bis zu 120 bar verwendet, um die erforderliche Durchsatzleistung zu erzielen. Das in dieser Einrichtung 18 anfallende Permeat wird ebenfalls zu der Permeatsammeleinrichtung 28 geleitet, von wo aus das mit Frischwasser angereicherte Permeat wieder in den Kreislauf zurückgelangen kann.

Das aus der Membranfiltereinrichtung 18 abgeleitete weiter aufkonzentrierte Abwasser kann anschließend in einem Reststoffverarbeitungszweig 26 weiterbehandelt werden. Dabei können zumindest Teile des Konzentrats eingedampft werden, wobei das Kondensat ebenfalls in die Permeatsammeleinrichtung 28 zurückgeleitet wird. Die nach dem Eindampfen zurückbleibenden Reststoffe können beispielsweise einer thermischen Verwertung zugeführt werden. Andere Teile des aus der Membranfiltereinrichtung 18 abgeleiteten Konzentrats können beispielsweise durch Adsorption oder Fällung oder Kombinationen davon weiter eingedickt werden. Die dabei anfallenden Reststoffe können ferner getrocknet werden, und anschließend ebenfalls einer thermischen Verwertung zugeführt werden. Anstelle einer thermischen Verwertung kommt beispielsweise auch die Endlagerung in Betracht.

Die übrigen in Fig. 2 dargestellten Verfahrensschritte bzw. schematisch angedeuteten Einrichtungen zur Durchführung dieser Verfahrensschritte entsprechen den üblichen Maßnahmen. Es muß beachtet werden, daß gerade Klarfiltrat oder Klarwasser die höchste kolloidale Belastung aufweist. Darüberhinaus sind erst am Ende eines Behandlungsprozesses die Kreisläufe aufgrund des Auslösers der belastenden Substanzen am höchsten belastet. Der Produktionsprozess verlangt jedoch eine Entlastung zur Papiermaschine hin, damit Agglomerationen vermieden werden.

Die geschilderte Tatsache erfordert die Einbindung der Filtration (Umkehrosmose) z. B. in dem hinteren Teil einer Stoffaufbereitung, jedoch vor dem Papiermaschinenkreislauf.

In Fig. 3 ist eine weitere Anlage zur Durchführung der erfindungsgemäßen Verfahrensschritte in einer schematischen Darstellung wiedergegeben und generell durch das Bezugszeichen 100 dargestellt. In der Fig. 3 wie auch in sämtlichen anderen Figuren, sind gleiche oder zumindest funktionsgleiche Verfahrensstufen bzw. -schritte mit den gleichen Bezugszeichen gekennzeichnet.

Dementsprechend werden bereits erörterte Verfahrensschritte bzw. Verfahrensstufen nicht zusätzlich diskutiert. Die Abwasserreinigungsanlage 100 gemäß Fig. 3 weist abweichend hinsichtlich der A-Stufen und jenseits der zweiten Membranfiltereinrichtung 16 keine Biologieeinrichtung bzw. Flotationseinrichtung 20, 22 auf, obwohl diese natürlich auch hier vorgesehen sein können, was dadurch angedeutet wird, daß an die zweite Membranfiltereinrichtung 16 ein Ast anschließt, der in eine Biologie- und eine Mikroflotationseinrichtung 20, 22 einmündet. Das aus den beiden Einrichtungen 20, 22 abgeleitete Abwasser kann, wie hier dargestellt, hinter einer dritten Membranfiltereinrichtung 118 wieder in den Filtrationskreislauf eingegeben werden. Die Reststoffe werden wie bei dem Ablauf gemäß Fig. 2 weiterbehandelt.

Die hier im Anschluß an die zweite Membranfiltereinrichtung 16 vorgesehene Membranfiltereinrichtung 118 ist nicht als Hochdruckfiltereinrichtung ausgebildet, obwohl sie prinzipiell auch als solche ausgebildet sein könnte. Da jedoch zumindest alternativ Permeat von einer nachfolgenden vierten Membranfiltereinrichtung 119 zugeführt werden kann, wird das der dritten Membranfiltereinrichtung 118 zugeführte Konzentrat verdünnt, so daß der Druck des Abwassers noch nicht derartig gesteigert werden muß, um durch die Membranen hindurch auf der Grundlage einer Umkehrosmose gefiltert werden zu können.

Auch das von der dritten Membranfiltereinrichtung 118 stammende Konzentrat kann den Biologie- und Mikroflotationseinrichtungen 20, 22 zugeleitet werden, um die durch die hohe Aufkonzentrierung anfallenden Feststoffe bzw. biologischen Stoffe zumindest weitgehend zu entfernen.

Eine vierte Membranfiltrationsstufe 119 ist als Hochdruckstufe ausgebildet, die bei Abwasserdrücken von 120 bar arbeitet. Das aus dieser Stufe anfallende Konzentrat ist derart aufkonzentriert, daß es prinzipiell sowohl unmittelbar einer thermischen Verwertung zugeführt werden kann als auch noch durch einen weiteren Eindickungsprozeß nebst anschließender Trocknung weiterbehandelt werden kann, um anschließend einer thermischen Verwertung zugeführt zu werden.

Das von der vierten Membranfiltereinrichtung 119 stammende Permeat kann zumindest teilweise auch zu der Permeatsammeleinrichtung 28 zurückgeführt werden. Allerdings sollten Teile des von der Einrichtung 119 abgeführten Permeats auch zur Verdünnung des von der Membranfiltereinrichtung 16 stammenden Konzentrats vor der Membranfiltereinrichtung 118 dem Konzentrat beigemengt werden, damit nicht schon die dritte Membranfiltereinrichtung 118 sehr hohe Drücke benötigt, um das aufkonzentrierte Abwasser basierend auf dem Prozeß der Umkehrosmose mittels seiner einzelnen Flachmembrankissen reinigen zu können.

Prinzipiell können anstelle der Umkehrosmose auch Nanofilter, Ultrafilter etc. verwendet werden. Die Nanofiltration arbeitet nach dem Anlagenprinzip der Umkehrosmose, jedoch mit porösen Membranen im Nanobereich liegen. Sie wird zur Rückgewinnung bestimmter Stoffe wie Füllstoffe, Streichmasse, Farben, Leim etc. eingesetzt um diese dem Wasserkreislauf fernzuhalten und dem Prozess erneut zuzuführen. Eine umfangreiche Entsalzung und CSB-Entfernung, wie dies zur Kreislaufschließung erforderlich ist, kann nicht erzielt werden.

Für die verschiedenen Membranfiltereinrichtung 14, 16, 18 gemäß Fig. 2 kommen die im folgenden aufgeführten Spezifikationen in Betracht:

### Erste Membranfiltereinrichtung 14:

Die Einrichtung 14 wandelt ca. 50 bis 80% je nach Anlagenaufbau 1 Stufe 30% 1A Stufe 50% Σ 75% des zugeführten Abwassers in Permeat um. Der Betriebsdruck liegt zwischen 15 und 65 bar und wird im Durchschnitt etwa 35 bar betragen. Die Durchsatzleistung einer typischen Anordnung aus Flachmembranen für die Einrichtung 14 beträgt 180 bis 250 l pro Stunde und Modul, wobei zu bedenken ist, daß zu einer entsprechenden Einrichtung 14 eine Vielzahl von einzelnen Modulen mit dieser Durchsatzleistung gehören. Der Flux beträgt etwa 24 bis 33 l, max. 45 l pro Quadratmeter und Stunde. Der Leitwert des Permeats beträgt 15 bis 35, max. 80 µS bei einem Leitwert in Zulauf der Einrichtung 14 von bis zu 15.000 µS. Die Membranstandzeit unter diesen Spezifikationen beträgt etwa 3 Jahre. Die Betriebszeit zwischen den Spülintervallen beträgt etwa 50 bis 120 Stunden.

### Zweite Membranfiltereinrichtung 16:

In der zweiten Einrichtung 16 wird ebenfalls etwa 50 bis 80% je nach Anlagenaufbau 2 Stufen 30% 2A Stufe 50% Σ 75% des zugeführten Konzentrats bzw. aufkonzentrierten Abwassers in Permeat umgewandelt. Dies erfolgt bei einem Betriebsdruck von etwa 25 bis 65 bar und im Durchschnitt etwa 42,5 bar. Die Durchsatzleistung liegt, wie auch bei der ersten Stufe bei etwa 180 bis 250 l pro Stunde je Modul aus einzelnen Flachmembranfiltern. Der Flux beträgt 24 bis 33 l max. 60 l pro Quadratmeter und Stunde. Der Leitwert des Permeats beträgt 20 bis 40 max. 180 µS bei einem Leitwert im Zulauf des zugeleiteten Konzentrats von maximal 15.000 µS. Auch hier beträgt die Standzeit einer Membran maximal 3 Jahre. Die Betriebszeit zwischen den Spülintervallen beträgt etwa 40 bis 90 Stunden.

### Dritte Membranfiltereinrichtung 18:

Die als Hochdruckstufe ausgebildete dritte Membranfiltereinrichtung 18 vermag 50 bis 95% des zugeführten Abwassers bzw. Konzentrats als Permeat abzuscheiden. Der Betriebsdruck kann etwa 80 bis 120 bar betragen. Auch hier beträgt die Durchsetzleistung pro Anordnung bzw. Modul aus einzelnen Flachmembranen etwa 180 bis 250 l/Stunde. Der Flux beträgt etwa 25 bis 33 l pro Quadratmeter und Stunde. Der Leitwert des Permeats liegt etwa zwischen 30 und 80 µS und maximal bei ca. 120 µS. Die Betriebszeit zwischen den einzelnen Spülintervallen liegt zwischen 30 und 90 Stunden. Der Leitwert im Zulauf liegt bei maximal 20.000 µS. Die Membranstandzeit liegt zwischen etwa 2 und maximal 3 Jahren.

Im Falle des Verfahrensablaufes gemäß der Fig. 3 haben die erste und die zweite Membranfiltereinrichtung die Spezifikation der ersten und zweiten Membranfiltereinrichtungen 14, 16 gemäß Fig. 2 und die vierte Membranfiltereinrichtung 119 hat in etwa die Spezifikationen der dritten Membranfiltereinrichtung 18, wobei der Betriebsdruck dieser vierten Membranfiltereinrichtung 119 jedoch eher an der oberen Grenze liegt, also bei etwa 120 bar und darüber. Im Falle der Verfahrensführung gemäß Fig. 3 hat die dritte Membranfiltereinrichtung 118 nachfolgende Spezifikationen:

Die Einrichtung 118 wandelt etwa 50 bis 80% des zugeführten Abwassers in Permeat um. Damit liegt der Gesamtwirkungsgrad der Membranfiltereinrichtungen 14, 16 und 118 gemäß Fig. 3 bei etwa 95%. Der Betriebsdruck liegt zwischen 35 und 65 bar und beträgt durchschnittlich etwa 50 Bar. Der Durchsatz liegt auch hier bei 180 bis 250 l pro Stunde und Modul aus einzelnen Flachmembranfiltern. Der Flux beträgt in etwa 24 bis 33 l pro Quadratmeter und Stunde. Der Leitwert des abgeleiteten Permeats beträgt etwa 25 bis 45 µS und maximal etwa 80 µS. Die Betriebszeit zwischen den einzelnen Spülintervallen liegt zwischen 40 und 90 Stunden. Der maximale Leitwert im Zulauf dieser Einrichtung 118 liegt bei 15.000 µS. Die Membranstandzeit liegt zwischen zwei und drei Jahren.

Die gemäß den Fig. 2 und 3 vorzunehmende Verfahrensführung ergibt neben einem wiederverwertbaren Permeat, das mit geringen Mengen von Frischwasser anzureichern ist, Reststoffe, die entweder einer Deponie oder der thermischen Verwertung zugeführt werden können. Auch können die Reststoffe in der Baustoffindustrie Verwendung finden.

Gemäß der Erfindung werden also eine Vielzahl von einzelnen Modulen mit Flachmembranfiltern, die pro Modul insgesamt beispielsweise eine Fläche von 7,6 m² aufweisen, eingesetzt, um in industriellen Größenordnungen, beispielsweise in einer Papierfabrik, eingesetzt werden zu können. Bedenkt man, daß beispielsweise für weißes Papier ca. 10 l Wasser pro kg Papier und für braunes Packpapier ca. 5 bis 8 l Wasser pro kg Papier erforderlich sind, so bedeutet die Reduzierung der Frischwasserzufuhr auf 1,5 bis 2 l pro kg Papier eine große Einsparung an Frischwasser. Bei höherwertigen Papieren, die darüber hinaus noch gestrichen werden, ergeben sich noch weit größere Einsparungen.

Die erfindungsgemäße Kreislaufeinengung bis zur vollkommenen Schließung durch Entsalzung und Entkeimung eröffnet umwelttechnisch optimistische Aussichten, da Abwasser vermieden werden kann und die Zufuhr von Frischwasser stark begrenzt wird. Die CSB-Reduzierung ist bis zu 99% möglich und darüber hinaus können die Hilfsstoffe zur Wasserreinigung ganz enorm eingeschränkt werden. Die Reststoffentsorgung wird sehr vereinfacht. Das Umlaufvolumen innerhalb des Kreislaufs einer Fabrik, beispielsweise für Papier, kann stark eingeengt werden. Anaerobe Zustände in Pufferbehältern, in denen nur gereinigtes Permeat zwischengelagert wird, können vermieden werden.

Wie oben bereits aufgezeigt, können anstelle der Membranfiltereinrichtungen 14, 16, 18, 118 sowie 119, die aus modularen Flachmembranen in Disctubetechnik mit freien und selbstreinigenden Kanälen gebildet sind, auch Nanofiltereinrichtungen verwendet werden. Umgekehrt kann in der in Fig. 4 dargestellten Verfahrensführung mit einer Anlage 200 anstelle einer Nanofiltrationseinrichtung 214 auch eine Membranfiltereinrichtung verwendet werden, wie sie in den Fig. 1 und 2 dargestellt ist.

Bei der in Fig. 4 dargestellten Verfahrensführung wird Abwasser, das aus einem Herstellungsverfahren, vorliegend etwa einem Verfahren zum Streichen von Papier stammt, etwa über einen Sammelbehälter in eine Vorfiltrationsstufe 12 geleitet werden, um dort auf einen Feststoffgehalt von maximal 20 m g/l Abwasser gebracht zu werden. Daraufhin werden der pH-Wert und der Ionenanteil auf die jeweiligen erfindungsgemäßen Bereiche eingestellt bzw. es wird überprüft, ob das Abwasser einen entsprechenden pH-Wert bzw. eine entsprechende Ionenkonzentration aufweist.

In der Nanofiltereinrichtung 214 werden äußerst feinporige Filter für die Filtration herangezogen, wobei entsprechende Filter nachfolgend aufgeführte Spezifikationen aufweisen können:

Die Einrichtung wandelt ca. 50 bis 95% des zugeführten Abwassers (Rohwasser) in Permeat um. Der Betriebsdruck liegt zwischen 15 und 65 bar und wird im Durchschnitt mit 30 bar betrieben. Die Durchsatzleistung einer typischen Anordnung aus Flachmembranen für die Einrichtung 214 beträgt 380 bis 600 L/Stunde und Modul. Der Flux beträgt etwa 50 bis 80 l/m² und Stunde. Der Leitwert des Permeats beträgt 80 bis 400 max. 800 µS. Die Membranstandzeit unter diesen Spezifikationen beträgt etwa 3 Jahre. Die Betriebszeit zwischen den Spülungen beträgt etwa 60 bis 120 Stunden.

Das aus der Nanofiltrationseinrichtung 214 abgeleitete Permeat wird in einer Sammeleinrichtung 228 mit Frischwasser angereichert und das sich daraus ergebende Rückwasser wird in das Verfahren zurückgeführt.

Mit dem vorgenannten Verfahren werden unersetzbare Resourcen geschützt und die Umwelt erheblich entlastet ohne daß die Produktionskosten steigen und das Endprodukt in seiner Qualität negativ beeinträchtigt wird.

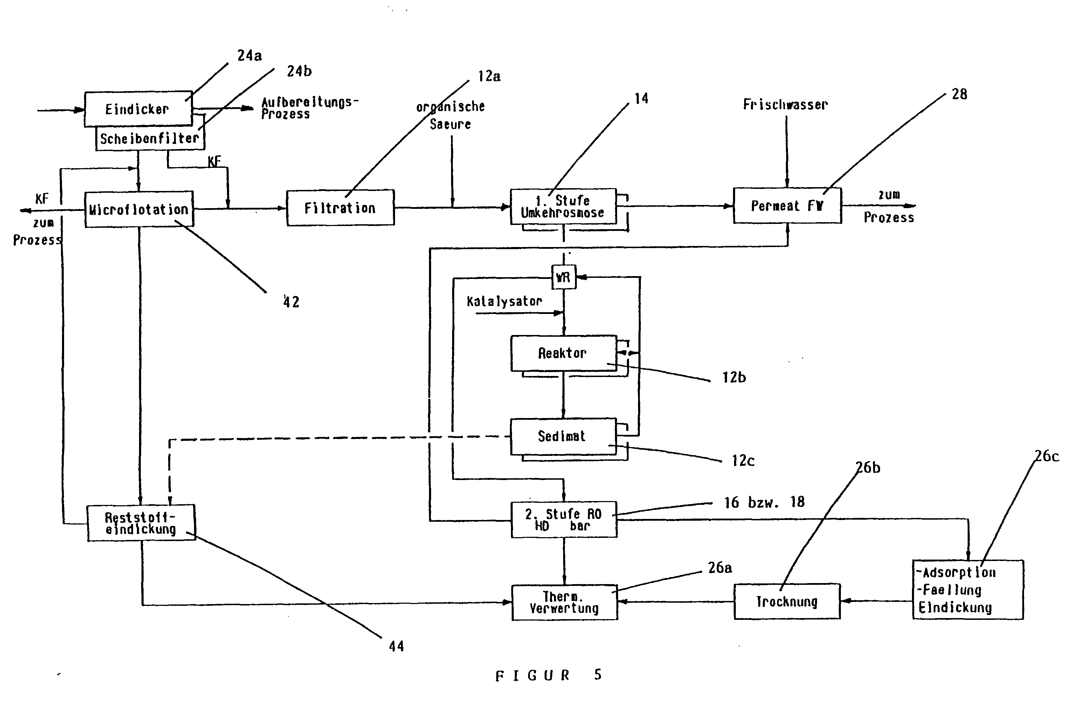

In Figur 5 ist eine weitere sehr vorteilhafte Ausführungsform gemäß der vorliegenden Erfindung dargestellt, bei der Abwässer mit geringer Kontamination, insbesondere organischer Kontamination, prozessiert werden.

Dabei wird bis zur Filtrationsstufe 12a zunächst wie gemäß Figur 1 vorgegangen. Wobei die weniger verschmutzten Abwässer zunächst in einer ersten Umkehrosmosestufe 14 (auch eine Nanofiltrationsstufe kann hier verwendet werden) aufkonzentriert werden.

Anschließend kann wie bei der Beschreibung der Verfahrensweise nach Figur 1 erläutert vorgegangen werden. Sodann werden Fest- und Schwebstoffe im Sedimat 12c aus dem vorgereinigten Abwasser entfernt und das vorgereinigte Abwasser wird über eine Wärmerückgewinnungsstufe WR (s. auch Fig. 1) zu der nächsten Feinreinigungsstufe 16 bzw. 18 geleitet, wo das vorgereinigte Abwasser weiter gereinigt wird, wie es bezüglich der vorangehenden Ausführungsformen gemäß den Figuren 1 bis 4 bereits erläutert worden ist.

Dabei kann auch hier die Grobreinigung durch einen Scheibenfilter bzw. durch Mikroflotation zur Feststoffreduzierung auf ca. 100 mg/l durchgeführt werden. Eine Filtrationsstufe 12a, die mittels einem Polizeifilter, also beispielsweise einem Band- oder Fließfilter, durchgeführt werden. Die Umkehrosmose mit der Stufe 14 zur Aufkonzentration der Reststoffe bei gering belasteten Abwässern kann in einer mindestens zweistufigen Anlage zu einer Gesamtausbeute von ca. 99% Permeat führen.

Das danach verbleibende Abwasser kann zum Aufoxidieren aller organischen Substanzen in den Reaktor 12b eingeleitet werden, wobei vor oder im Reaktor der bereits erläuterte Katalysator zugesetzt werden kann, während eine organische Säure bereits vor der ersten Stufe der Umkehrosmose 14 zugesetzt werden sollte.

Das den Reaktor 12b verlassende Abwasser kann nach dem Durchlauf durch den Sedimat 12c und die Wärmerückgewinnung WR einer weiteren Umkehrosmosestufe zugeführt werden, die bei Betriebsdrucken zwischen 80 und 200 bar arbeitet.

Durch die Verwendung der erfindungsgemäßen Verfahrensweise lassen sich die Reduktion von CSB, Lignin, Stärke, Kleber, Bindemittel, Stickies und sonstigen organischen Substanzen um bis zu 98% bewerkstelligen. Auch Farben, die biologisch nicht abbaubar sind, lassen sich weitgehend entfernen. Calciumkarbonat kann oxidiert werden. Keime im Abwasser werden beseitigt.

Es bleiben lediglich anorganische Substanzen zurück, die sich beispielsweise durch Umkehrosmose weitgehendst entfernen lassen.

Gemäß der erfindungsgemäßen Verfahrensweise ist es möglich, eine ansonsten erforderlich Vorfiltration, beispielsweise Mf-Uf wegfallen zu lassen, da störende oxidierbare Substanzen bei der Oxidationsreaktion abgebaut worden sind. Die Membranfiltration kann mit einem hohen Durchsatz und geringen Fehlzeiten durchgeführt werden, da Bakterien wie auch Nährsubstanzen für Bakterien im Abwasser durch Oxidation zerstört worden sind. Die Reinigung der Membranen ist relativ einfach, da keine organischen Substanzen vorhanden sind, die die Membran im ungünstigen Falle durchwachsen könnten.

Bei einer geringen Wasserbelastung, wie bei der Ausführungsform gemäß der Figur 5, kann die Verfahrensführung derart sein, daß die Membranfiltration im Vollstrom betrieben wird und das Konzentrat aus der Filtration in der Reaktorstufe 12b nachbehandelt wird.

Gemäß der Erfindung kann folglich ein Abwasserreinigungsverfahren zur Verfügung gestellt werden, das zur umweltfreundlichen und kostengünstigen Aufbereitung von hochbelasteten farbigen und nichtfarbigen Ab- und Kreislaufwässern bis 20 000 mg CSB pro Liter Wasser herangezogen werden kann.

Dabei können natürliche und synthetische Farbstoffe, organische Öle und Fette, Dispergiermittel und Emulsionen und natürliche sowie synthetische Polymere überraschend weitgehend entfernt werden, ohne die Stufen eines Umkehrosmoseprozesses oder eines Nanofiltrationsprozesses übermäßig zu belasten. Ein abwasserfreier Betrieb kann hierdurch ermöglich werden. Es können bis zu 50% der Reinigungschemikalien eingespart werden und eine Steigerung des Durchsatzes kann bei höherer Wasserqualität und verbesserter Reproduzierbarkeit gewährleistet werden. Dies geht mit einer Verbesserung der Reproduzierbarkeit und Kostensenkungen einher, wobei die Ökobilanz wesentlich verbessert wird und die Unternehmen unabhängig von Umweltauflagen werden.

Die voranstehenden Vorteile lassen sich auch in einem kontinuierlichen Betrieb bei einer Belastung im Zulauf von 0 bis 150 mg/l an Abfallstoffen erzielen, wobei der CSB bezogen auf den Sauerstoffbedarf in einem Verhältnis von 1: 6 bis 1: 12 liegt. Eine Verweilzeit von bis 45 Minuten im Reaktor 12b bei einer Norm-Verweilzeit von 15 bis 20 Minuten für das Abwasser ist erforderlich. Die Abbaurate der Abfallstoffe kann zu 70% über Luft-Sauerstoff und zu 30% über Katalysator bewerkstelligt werden. Die Konzentration der organischen Reststoffe im Sedimat 12c beträgt 2 bis 3% TS.

## Patentansprüche

1. Verfahren zur Aufbereitung von belastetem Wasser, insbesondere Produktionswasser bzw. Abwässern in einem zumindest teilweise geschlossenen, vorzugsweise geschlossenen Kreislauf, vorzugsweise für die Papierindustrie, mit den folgenden schritten:
a) das belastete Wasser bzw. Abwasser wird bis auf einen Gehalt von <200 mg/l, vorzugsweise 0 bis 150 mg/l Feststoffen grobgereingt, wobei das von einer üblichen Vorreinigung, wie beispielsweise Mikroflotation und/oder Scheibenfilter, kommende Abwasser einer Fällungsreaktion derart unterzogen wird, daß ein Feststoffgehalt von < 20 mg/l, ein Bariumionengehalt (Ba²⁺) und ein Sulfationengehalt (SO₄²⁻) von max. 10⁻⁹ g/l und ein Kalziumionengehalt (Ca²⁺) und ein Sulfationengehalt (SO₄²⁻) von max. 5 x 10⁻⁴ g/l erreicht wird;
b) das grobgereingte Wasser bzw. Abwasser wird auf eine Temperatur von 70 bis 160°C, vorzugsweise 100 bis 130°C aufgeheizt;
c) das grobgereingte Wasser bzw. Abwasser wird einem Reaktionsraum zugeführt, in dem eine Oxidation vorgenommen wird;
d) mit dem vorgereinigten Abwasser wird nachfolgend mindestens eine Membranfiltereinrichtung (14, 16, 18; 118; 119) bzw. Nanofiltereinrichtung angeströmt.

2. Verfahren nach Anspruch 1, **dadurch gekennzeichnet, daß** das grobgereinigte Wasser bzw. Abwasser in seinem pH-Wert auf einen Wert bis zu 6,5, vorzugsweise 2 bis 3, eingestellt wird.

3. Verfahren nach einem der Ansprüche 1 oder 2, **dadurch gekennzeichnet, daß** das gemäß Schritt 1.a) behandelte Abwasser dann einer mehrstufigen Umkehrosmose unterzogen wird, wobei das Konzentrat der ersten Umkehrosmoseeinrichtung wenigstens einer weiteren Umkehrosmoseeinrichtung (16, 18; 119) mit einem Druck zugeführt wird, der höher ist als der Druck der jeweils vorangehenden Filter- bzw. Umkehrosmoseeinrichtung (14; 118).

4. Verfahren nach Anspruch 1, **dadurch gekennzeichnet, daß** die Oxidation des grobgereinigten Wassers mit einem Oxidationsmittel, vorrangig Luft-Sauerstoff, bei einer Temperatur gemäß Schritt 1c) vorgenommen wird, wobei bevorzugt ein Katalysator zugesetzt wird.

5. Verfahren nach einem der Ansprüche 1 bis 4, **dadurch gekennzeichnet, daß** in den Reaktionsraum als Oxidationsmittel Stoffe wie etwa Peroxid, Eisenoxid, und/oder dgl. bzw. als Katalysator organische Säuren, wie etwa Phosphorsäure, Schwefelsäure dem grobgereinigten Wasser zugesetzt werden.

6. Verfahren nach einem der Ansprüche 1 bis 4, **dadurch gekennzeichnet, daß** in dem Reaktionsraum ein Druck von 1 bis 15 bar, bevorzugt von 1 bis 5 bar eingestellt wird, wobei insbesondere die Energie zur Erhitzung des Abwassers durch die Reaktionswärme vorzugsweise über eine Wärmerückgewinnungsanlage aufgebracht wird.

7. Verfahren nach einem der Ansprüche 1 bis 6, **dadurch gekennzeichnet, daß** das Abwasser vor dem Schritt 1a) durch eine Umkehrosmose und/oder Nanofiltration vorkonzentriert wird, wenn eine jeringe Feststoffkonzentration im Abwasser von 10 mg/l vorliegt.

8. Verfahren nach einem der voranstehenden Ansprüche, **dadurch gekennzeichnet, daß** der Druck des Abwassers an bzw. vor der Membranfiltereinrichtung auf 10 bis 200 bar, vorzugsweise 30 bis 120 bar eingestellt wird, bzw. daß der Druck des Abwassers an bzw. vor einer angeordneten Nanofiltereinrichtung (214) auf 15 bis 60 bar eingestellt wird.

9. Verfahren nach einem der voranstehenden Ansprüche, **dadurch gekennzeichnet, daß** im Verlauf der Schritte 1a) bis 1c) bzw. zumindest vor Schritt 1d) der Eisensulfatgehalt bis zur Flockungsgrenze verringert wird.

10. Verfahren nach einem der voranstehenden Ansprüche, **dadurch gekennzeichnet, daß** das aus der Filtereinrichtung abgeführte Permeat bzw. gefilterte Wasser in den Kreislauf einer Anlage zurückgeführt wird.

11. Verfahren nach einem der Ansprüche 1 bis 10, **dadurch gekennzeichnet, daß** zwischen den Filter- bzw. Umkehrosmosestufen eine weitere Fällungsreaktion und/oder Oxidation durchgerührt wird.

## Claims

1. A process for conditioning contaminated water, in particular production water or waste water in an at least partially closed, preferably fully closed circuit, preferably for the paper industry, involving the following steps:
a) The contaminated water or waste water is crudely purified to obtain a solids content of <200 mg/l, preferably 0 to 150 mg/l, where the waste water originating from a conventional pre-purification stage - such as microflotation and/or disc filter - is subjected to a precipitation process in such a way that a solids content of <20 mg/l, a barium ion content (Ba²⁺) and a sulphate ion content (SO₄²⁻) of 10⁻⁹ g/l max. and a calcium ion content (Ca²⁺) and a sulphate ion content (SO₄²⁻) of 5 x 10⁻⁴ g/l max. is obtained;
b) the crudely purified water, or waste water, is heated to a temperature of 70 to 160 °C, preferably 100 to 130 °C;
c) the crudely purified water, or waste water, is fed into a reaction space where an oxidation is performed;
d) the pre-purified waste water is subsequently directed to a membrane filter means (14, 16, 18; 118; 19) or nanofilter means.

2. A process according to claim 1, **characterised in that** the crudely purified water, or waste water, is adjusted to a pH-value of up to 6.5, preferably 2 to 3.

3. A process according to either of claims 1 or 2, **characterised in that** the waste water treated according to step 1.a) is then subjected to a multiple-stage reverse osmosis, where the concentrate from the first reverse osmosis means is fed to at least another reverse osmosis means (16, 18; 119) with a pressure which is higher than the pressure in each previous filtering and reverse osmosis means (14; 118).

4. A process according to claim 1, **characterised in that** the oxidation of the crudely purified water is performed with an oxidation agent, predominantly air/oxygen, at a temperature as in step 1c), where a catalyst is preferably added.

5. A process according to any of claims 1 to 4, **characterised in that** substances such as peroxide, iron oxide and/or similar substances are added as oxidation agents, or organic acids, such as phosphoric acid, sulphurous acid, are added to the crudely purified water as catalysts in the reaction space.

6. A process according to any of claims 1 to 4, **characterised in that** a pressure of 1 to 15 bar, preferably 1 to 5 bar, is set in the reaction space, where especially the energy for heating the waste water by the process heat is preferably obtained from a heat recovery system.

7. A process according to any of claims 1 to 6, **characterised in that** the waste water is pre-concentrated before step 1a) by reverse osmosis and/or nanofiltration if a low solids concentration of <10 mg/l exists in the waste water.

8. A process according to any of the previous claims, **characterised in that** the pressure of the waste water on or before the membrane filter means is set to 10 to 200 bar, preferably 30 to 120 bar, or that the pressure of the waste water on or before a nanofilter means (214) provided is set to 15 to 60 bar.

9. A process according to any of the previous claims, **characterised in that** the iron sulphate content is reduced to the flocculation limit in the course of steps 1a) to 1c), or at least before step 1d).

10. A process according to any of the previous claims, **characterised in that** the permeate, or filtered water discharged from the filter means is recycled into the circuit of a plant.

11. A process according to any of claims 1 to 10, **characterised in that** another precipitation reaction and/or oxidation is performed between the filtering and/or reverse osmosis steps.

## Revendications

1. Procédé de traitement d'eaux chargées, en particulier d'eaux de production ou d'eaux usées, dans un circuit du moins partiellement fermé, de préférence fermé, en particulier dans l'industrie papetière, comprenant les phases suivantes:
a) l'eau chargée ou l'eau usée est soumise à une épuration grossière jusqu'à l'atteinte d'une teneur de <200 mg/l, de préférence 0 à 150 mg/l en matières solides, l'eau provenant d'une épuration préalable conventionnelle telle que la micro-flottation et/ou un filtre à disque tamisant étant soumise à une réaction de précipitation de sorte qu'il en résulte une teneur en matières solides de <20 mg/l, une teneur maximale en ions de baryum (Ba²⁺) et en ions de sulfate (SO₄²⁻) de 10⁻⁹ g/l ainsi qu'une teneur maximale en ions de calcium (Ca²⁺) et en ions de sulfate (SO₄²⁻) de 5 x 10⁻⁴ g/l;
b) l'eau ou l'eau usée grossièrement épurée est portée à une température de 70 à 160 °C, de préférence 100 à 130 °C;
c) l'eau ou l'eau usée grossièrement épurée est introduite dans une chambre de réaction destinée à l'oxydation;
d) l'eau épurée préalablement est ensuite transportée vers au moins une installation de filtration à diaphragme (14, 16, 18; 118; 119) ou vers une installation à nanofiltration.

2. Procédé d'après la revendication 1, **caractérisé en ce que** l'eau ou l'eau usée grossièrement épurée est portée à une valeur pH de jusqu'à 6,5, de préférence d'entre 2 et 3.

3. Procédé d'après la revendication 1 ou 2, **caractérisé en ce que** l'eau usée traitée d'après 1a) est soumise ensuite à un procédé d'osmose inversée à plusieurs étages, le concentré provenant de la première installation à osmose étant mené vers au moins une autre installation à osmose (16, 18; 119), la pression de la phase suivante étant plus élevée que la pression respective de l'installation de filtration ou de l'installation à osmose précédente (14; 118).

4. Procédé d'après la revendication 1, **caractérisé en ce que** l'oxydation de l'eau grossièrement épurée est effectuée au moyen d'un produit d'oxydation, de préférence de l'oxygène atmosphérique, à la température selon 1c), avec, de préférence, l'apport d'un catalyseur.

5. Procédé d'après une des revendications 1 à 4, **caractérisé en ce que** dans la chambre à réaction, il est ajouté à l'eau grossièrement épurée, en tant que produit d'oxydation, des substances tel que du peroxyde, de l'oxyde ferrique et/ou un produit similaire, ou, en tant que catalyseur, des acides organiques tel que de l'acide phosphorique ou de l'acide sulfurique.

6. Procédé d'après une des revendications 1 à 4, **caractérisé en ce que** dans la chambre à réaction, il est réglé une pression d'entre 1 et 15 bars, de préférence d'entre 1 et 5 bars, l'énergie de réchauffement de l'eau provenant de la chaleur de réaction, de préférence par l'intermédiaire d'une installation de récupération de chaleur.

7. Procédé d'après une des revendications 1 à 6, **caractérisé en ce qu'**avant la phase 1a), l'eau usée est concentrée préalablement par un procédé d'osmose inversée et/ou par nanofiltration, du moment que l'eau usée présente une teneur en matières solides de <10 mg/l.

8. Procédé d'après une des revendications précédentes, **caractérisé en ce que** la pression de l'eau usée sur ou en amont de l'installation de filtration à diaphragme est réglée entre 10 et 200 bars, de préférence entre 30 et 120 bars, ou que la pression de l'eau usée sur ou en amont de l'installation de nanofiltration (214) est réglée entre 15 et 60 bars.

9. Procédé d'après une des revendications précédentes, **caractérisé en ce que** durant l'évolution des procédés 1a) à 1c) ou du moins avant la phase 1d), la teneur en sulfate ferrique est réduite jusqu'à la limite de floculation.

10. Procédé d'après une des revendications précédentes, **caractérisé en ce que** le permeat évacué de l'installation de filtration ou l'eau filtrée est ramené(e) dans le circuit d'une installation.

11. Procédé d'après une des revendications 1 à 10, **caractérisé en ce qu'**entre les phases de filtration ou d'osmose inversée, il est effectué une autre réaction de précipitation et/ou oxydation.
